# EUROPEAN PATENT APPLICATION

(11) **EP 2 608 016 A2**
(43) Date of publication of application: **26.06.2013**
(21) Application number: 12189924.9
(22) Date of filing: 25.10.2012
(51) Int. Cl.: G06F 9/38

(54) **Processing device and method for controlling processing device**

(30) Priority: 21.12.2011 JP 2011280004
(71) Applicant: FUJITSU LIMITED, Kawasaki-shi, Kanagawa 211-8588 (JP)
(72) Inventor: Gomyo, Norihito, Kanagawa, 211-8588 (JP); Sunayama, Ryuichi, Kanagawa, 211-8588 (JP)
(74) Representative: HOFFMANN EITLE

(57) **Abstract**

A processing device has an instruction buffer retaining one or more instructions obtained by an instruction fetch request, an instruction execution control unit decoding and executing an instruction, a branch prediction mechanism retaining one or more branch histories including a distance flag indicating a difference between a branch instruction address and a branch destination instruction address and performing a branch prediction of an instruction, and an instruction fetch control unit issuing the instruction fetch request. When a branch prediction result is a branch taken and it is judged based on the distance flag that the instruction fetch request for the branch destination instruction address is included in the instruction fetch requests in a sequential direction which are issued until the branch prediction result is outputted, the control unit causes to output an instruction retained in the instruction buffer without issuing an instruction fetch request for the branch destination instruction address.

## Description

### FIELD

The embodiment discussed herein is directed to a processing device and a method for controlling the processing device.

### BACKGROUND

As a method for increasing speed of instruction fetch in a processing device, there is a method to provide an instruction buffer retaining one or more instructions outputted by an instruction cache memory between the instruction cache memory and an instruction decoder to pre-read (fetch) an instruction. The instruction is often executed in a sequential direction (direction in which an instruction address increases), and thus it is possible to improve performance by pre-reading an instruction in the sequential direction with respect to an instruction which is currently executed. The instruction buffer has plural entries, where an instruction transferred from the instruction cache memory for one instruction fetch request is stored in one entry.

However, in the above-described method to pre-read an instruction, when the order of executing instructions changes by a branch instruction, an instruction fetch of a branch destination instruction is performed after the entry of the instruction buffer storing a pre-read instruction is canceled, and thus the performance decreases. As a method to mitigate this decrease in performance, the following method is proposed (see, for example, Patent Document 1). The branch displacement information (difference in address value between a branch instruction and a branch destination instruction) which the branch instruction itself has is used at a time of decoding the instruction, so as to judge whether or not the branch destination instruction is pre-read and stored in the instruction buffer. When it is judged that the instruction is pre-read, the instruction stored in the instruction buffer is used without being cancelled.

As methods for specifying a branch destination address which is the instruction address of the branch destination instruction, there are instruction relative address specification and register relative address specification. The instruction relative address specification is a method to specify a difference between a branch instruction address which is the instruction address of the branch instruction itself and the branch destination address. The register relative address specification is a method to specify the branch destination address by using a calculation result of a value of one or more registers and an immediate value included in the branch instruction. In the case of the branch instruction of the register relative address specification, it is possible that the instruction executed immediately before the branch instruction rewrites the register value, and hence the branch destination address is not determined at a time when the instruction is decoded. Therefore, it is not possible to judge whether or not the branch destination instruction is pre-read and stored in the instruction buffer at the time when the instruction is decoded.

Further, accompanying improvement in operating frequency of an instruction control device, the time of a few cycles is taken from when the instruction fetch request is issued to the instruction cache memory to when the instruction cache memory outputs the instruction. When the instruction requested by the instruction fetch request is not present in the instruction cache memory, the instruction is transferred from a main memory, a shared cache memory, or the like to the instruction cache memory, and this takes a longer time. Accordingly, by a method which performs the instruction fetch of the branch destination instruction after the instruction decoder decodes whether the instruction is the branch instruction or not, it is not possible to improve performance.

As a method for improving this situation, there is a method to provide a branch prediction mechanism to predict the branch destination address before the branch instruction is decoded, and pre-read the branch destination instruction which is present in the branch destination address. The branch prediction mechanism stores information of branch instructions executed in the past such as a branch instruction address, a branch destination address, a branch taken or not taken, and so on as a branch history. The branch prediction mechanism predicts the branch taken or not taken and the branch destination address by retrieving a branch history by using the instruction address at a time of the instruction fetch. For example, there has been proposed a method to include the branch prediction mechanism retaining the branch instruction address and the branch destination address and the instruction buffer, and increase speed of instruction processing when the branch prediction is wrong (see, for example, Patent Document 2).

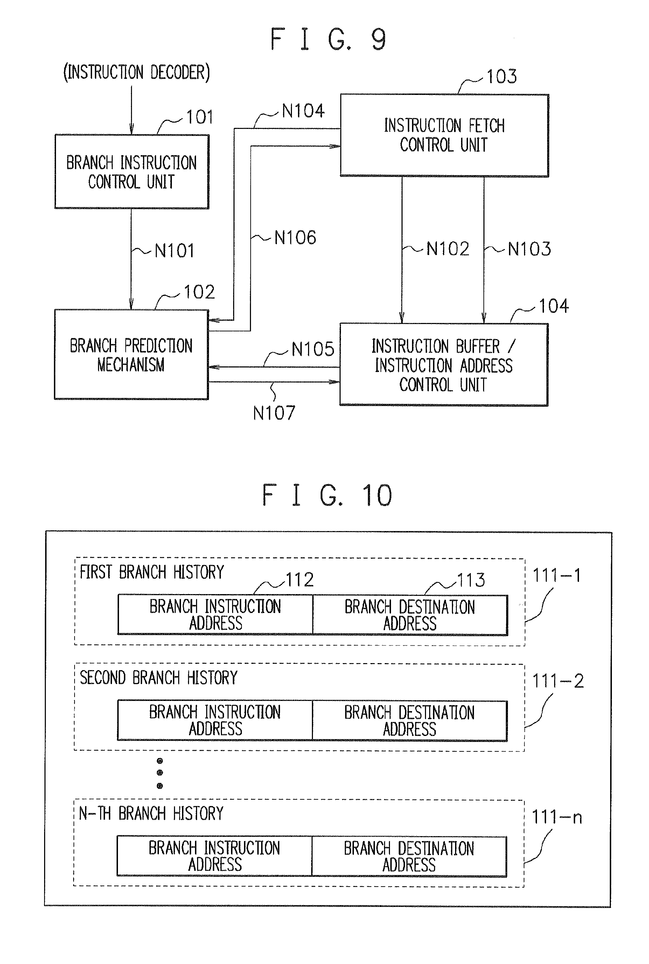

A conventional branch prediction operation will be described with reference to FIG. 9 and FIG. 10.

To perform the branch prediction, information of branch instructions which are executed in the past is used. As a result of decoding an instruction, when it is determined that the decoded instruction is a branch instruction, the branch instruction is transmitted from the instruction decoder to a branch instruction control unit 101. The branch instruction control unit 101 checks whether a branch of the branch instruction is taken or not based on the branch instruction, and in the case of the branch taken, the branch instruction control unit 101 transmits branch instruction information N101 related to this branch instruction to a branch prediction mechanism 102 after waiting until the branch destination address is determined. The branch instruction information N101 transmitted to the branch prediction mechanism 102 includes a branch taken or not taken, a branch instruction address, and a branch destination address. The branch prediction mechanism 102 stores, as illustrated in FIG. 10, a branch instruction address 112 and a branch destination address 113 of the branch instruction information N101 transmitted from the branch instruction control unit 101 as branch histories 111-1, 111-2, ..., 111-n.

An instruction fetch control unit 103 issues an instruction fetch request to the instruction cache memory, and outputs an instruction address control signal N102 and an instruction buffer control signal N103 to an instruction buffer and instruction address control unit 104. Upon reception of the control signal N102 and N103, the instruction buffer and instruction address control unit 104 outputs an instruction fetch address to the instruction cache memory, and assigns an entry of the instruction buffer for storing the instruction transferred from the instruction cache memory.

Thereafter, the instruction fetch control unit 103 instructs the instruction buffer and instruction address control unit 104 to perform a notification N105 of the instruction address outputted together with the instruction fetch request to the branch prediction mechanism 102. The instruction fetch control unit 103 also outputs a branch prediction signal N104 for this instruction address to the branch prediction mechanism 102. Upon reception of the branch prediction signal N104, the branch prediction mechanism 102 retrieves a branch history by using the instruction address notified by the instruction buffer and instruction address control unit 104, and notifies a branch prediction result (a branch taken or not taken) N106 thereof to the instruction fetch control unit 103. When the branch prediction mechanism 102 predicts the branch taken, the branch prediction mechanism 102 further notifies a branch destination address in the branch history as a branch destination prediction address N107 to the instruction buffer and instruction address control unit 104.

Here, retrieval of the branch history performed during the branch prediction takes time, and thus the branch prediction result is recognized when N cycles (N is an integer of 1 or more) pass after the instruction fetch request is issued. The issuance of the instruction fetch request for the branch destination prediction address is performed after the branch prediction result is recognized, and thus is performed when (N + 1) cycles pass after the previous instruction fetch request is issued. That is, there is an interval of N cycles between when the instruction fetch request of the branch instruction address is issued and when the instruction fetch request of the branch destination prediction address is issued.

In this period of N cycles, whether the branch is taken or not and the branch destination prediction address are unknown, and thus by issuing the instruction fetch request N times with the instruction address being added in the sequential direction, performance in the case where instructions are executed sequentially in the sequential direction is improved. When the branch prediction result is not the branch taken, the instruction fetch requests of N times in the sequential direction are used as they are. On the other hand, when the branch prediction result is the branch taken, the instruction fetch control unit 103 issues the instruction fetch request for the branch destination prediction address after cancel instructions are issued to the entries of the instruction buffer assigned to the instruction fetch requests of N times.
[Patent Document 1] Japanese Laid-open Patent Publication No. 10-124314
[Patent Document 2] International Publication Pamphlet No. WO2004/107163
[Patent Document 3] Japanese Laid-open Patent Publication No. 2000-172503

In the above-described conventional branch prediction operation, at the time of branch prediction performed before decoding the instruction, there is no information related to the difference between the branch destination prediction address and the branch instruction address. Accordingly, even when the branch prediction result is the branch taken, and the instruction fetch request for the branch destination prediction address is included in the instruction fetch requests of N times in the sequential direction which is performed before the branch prediction result is recognized, the instructions pre-read by the instruction fetch requests of N times are canceled. Then, there is a problem that it becomes processing such that the instruction fetch request for the branch destination prediction address is issued again, and the performance decreases.

As a method for solving this problem, a conceivable method is to calculate the difference between the branch destination prediction address and the branch instruction address at a time of branch prediction, and to judge whether the instruction fetch request for the branch destination prediction address is included or not in the instruction fetch requests of N times in the sequential direction which are performed by using this difference before the branch prediction result is recognized. However, when the number of bits of the instruction address is large, the scale of the circuit for calculating the difference between the branch destination prediction address and the branch instruction address becomes large, and a time for calculation becomes long. Thus, it is difficult to perform calculation at the same timing as the branch prediction result is recognized. Therefore, the difference between the branch destination prediction address and the branch instruction address is not obtained unless one to several cycles further pass after the branch prediction result is recognized, and the speed of the instruction fetch is not increased.

### SUMMARY

In one aspect, an object of the embodiment is to improve performance of an instruction fetch by effectively using one or more instructions retained in an instruction buffer in a processing device which performs a branch prediction.

A processing device of one aspect has a storage unit that stores instructions, an instruction buffer that retains one or more instructions obtained from the storage unit based on an instruction fetch request, an instruction decoding unit that decodes an instruction outputted by the instruction buffer, an execution unit that executes an instruction decoded by the instruction decoding unit, a branch prediction unit that retains branch history information including distance information indicating a difference between a branch instruction address which is an address of a branch instruction and a branch destination instruction address which is an address of an instruction of a branch destination among instructions executed by the execution unit and performs a branch prediction of an instruction obtained based on the instruction fetch request by using the retained branch history information, and a control unit that issues the instruction fetch request. In a period from when an instruction fetch request for a first address is issued to when the branch prediction unit outputs a branch prediction result for a first instruction obtained based on the issued instruction fetch request, the control unit issues an instruction fetch request for a second address made by adding a certain value to the first address. When the branch prediction unit predicts that the branch prediction result of the first instruction is a branch taken, if it is judged based on the distance information that the branch destination instruction address predicted as the branch taken is included in an address corresponding to the instruction fetch request for the second address, the control unit causes the instruction decoding unit to output an instruction retained in the instruction buffer based on the instruction fetch request for the second address without issuing an instruction fetch request for the branch destination instruction address.

### BRIEF DESCRIPTION OF DRAWINGS

FIG. 1 is a diagram illustrating a configuration example of a processing device according to an embodiment;
FIG. 2 is a diagram illustrating a configuration example of an instruction control device in this embodiment;
FIG. 3 is a diagram for describing a branch prediction operation in this embodiment;
FIG. 4 is a diagram illustrating branch histories stored in a branch prediction mechanism in this embodiment;
FIG. 5 is a flowchart illustrating an example of an instruction fetch operation in this embodiment;
FIG. 6A to FIG. 6C are diagrams for describing an instruction fetch operation in this embodiment;
FIG. 7 is a diagram illustrating an instruction fetch cancel control in this embodiment;
FIG. 8 is a diagram illustrating an instruction buffer cancel control in this embodiment;
FIG. 9 is a diagram for describing a conventional branch prediction operation; and
FIG. 10 is a diagram illustrating branch histories stored in a branch prediction mechanism illustrated in FIG. 9.

### DESCRIPTION OF EMBODIMENTS

Hereinafter, a preferred embodiment will be explained based on the drawings.

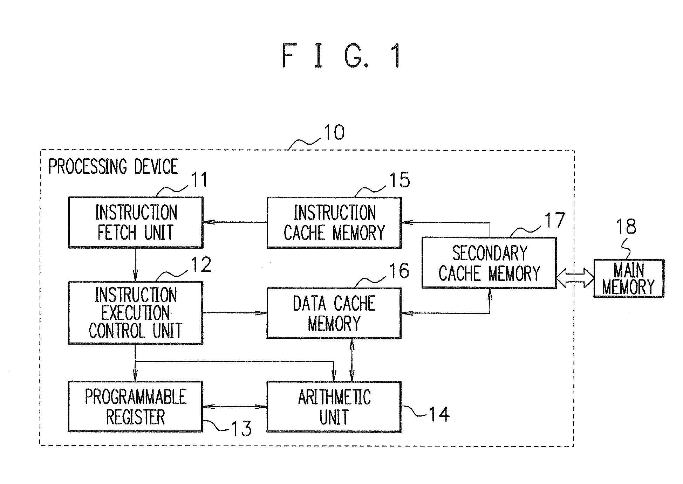

FIG. 1 is a block diagram illustrating a configuration example of a processing device according to one embodiment. The processing device is, for example, a central processing unit (CPU). A processing device 10 has an instruction fetch unit 11, an instruction execution control unit 12, a programmable register 13, an arithmetic unit 14, an instruction cache memory 15, a data cache memory 16, and a secondary cache memory 17.

The instruction fetch unit 11 instructs the instruction cache memory 15 to retrieve an instruction and retains one or more of the instructions which are supplied in response in an internal instruction buffer. Further, the instruction fetch unit 11 supplies the instruction retained in the instruction buffer to the instruction execution control unit 12. The instruction execution control unit 12 decodes the instruction supplied from the instruction fetch unit 11, and executes processing according to the decoding result. The processing to be executed according to the decoding result is, for example, issuing an instruction to the arithmetic unit 14, reading or controlling update of the programmable register 13, reading or controlling update of the data cache memory 16, or the like.

The programmable register 13 is a group of registers which are readable/writable by software, such as a program counter (PC), a general purpose register (GPR), a floating point register (FPR), or the like. In accordance with an instruction from the instruction execution control unit 12, the programmable register 13 supplies a register value to the arithmetic unit 14 or stores a result by the arithmetic unit 14. In accordance with an instruction from the instruction execution control unit 12, the arithmetic unit 14 performs various types of arithmetic such as integer arithmetic, floating-point arithmetic, and main memory address arithmetic.

The instruction cache memory 15, the data cache memory 16, and the secondary cache memory 17 are storage units storing part of data stored in a main memory 18. If an instruction requested by the instruction fetch unit 11 exists in the instruction cache memory 15, this instruction is read from the instruction cache memory 15 and supplied, but if not existing in the instruction cache memory 15, a request for the instruction is performed in the order of the secondary cache memory 17 and the main memory 18. If data requested by the instruction execution control unit 12 exist in the data cache memory 16, the data are read from the data cache memory 16 and supplied, but if not existing in the data cache memory 16, a request for the data is performed in the order of the secondary cache memory 17 and the main memory 18.

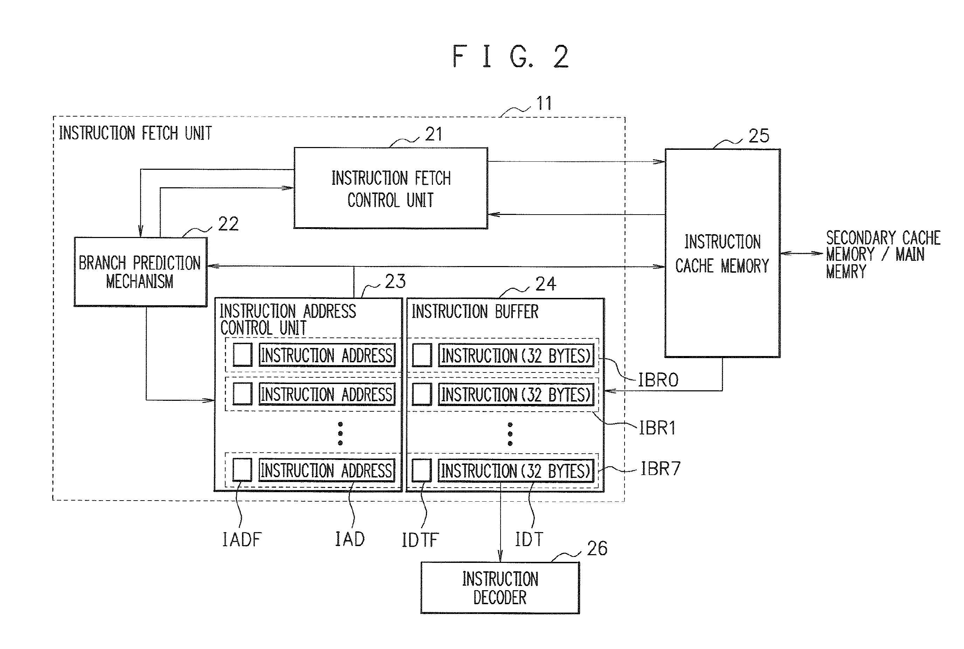

FIG. 2 is a block diagram illustrating an overview of a configuration example of an instruction control device in this embodiment.

The instruction fetch unit 11 instructs an instruction cache memory 25 to output an instruction. Further, the instruction fetch unit 11 retains one or more instructions outputted from the instruction cache memory 25 in an instruction buffer 24, and supplies the retained instruction to an instruction decoder 26 which an instruction execution control unit has. The instruction fetch unit 11 has an instruction fetch control unit 21, a branch prediction mechanism 22, an instruction address control unit 23, and an instruction buffer 24.

The instruction fetch control unit 21 instructs the instruction address control unit 23 to generate an instruction fetch address by using a branch prediction result supplied from the branch prediction mechanism 22. Further, the instruction fetch control unit 21 instructs the branch prediction mechanism 22 to execute a branch prediction with respect to the instruction fetch address transmitted from the instruction address control unit 23. Further, the instruction fetch control unit 21 issues an instruction fetch request to the instruction cache memory 25, and controls the instruction buffer 24. The control of the instruction buffer 24 by the instruction fetch control unit 21 is performed in a period from when the instruction fetch request is issued to when all the instructions retained in the instruction buffer 24 are supplied to the instruction decoder 26.

The branch prediction mechanism 22 stores, as a branch history, information of branch instructions executed in the past, such as a branch instruction address, a branch destination address, and a branch taken or not taken, and performs a branch prediction by using one or more of the stored branch histories. When the execution of branch prediction is instructed by the instruction fetch control unit 21, the branch prediction mechanism 22 retrieves the branch history by using the instruction fetch address notified by the instruction address control unit 23, and notifies the branch prediction result thereof to the instruction fetch control unit 21. Further, when the branch prediction mechanism 22 predicts a branch taken, the branch prediction mechanism 22 notifies a branch destination address in the branch history as a branch destination prediction address to the instruction address control unit 23.

In response to the instruction from the instruction fetch control unit 21, the instruction address control unit 23 selects an instruction address whose address value is increased by a constant value in a sequential direction or a branch destination prediction address which is supplied from the branch prediction mechanism 22. The instruction address control unit 23 transmits the selected address as the instruction fetch address to the instruction cache memory 25 and the branch prediction mechanism 22, and retains this instruction fetch address in each entry of the instruction buffer 24. The instruction buffer 24 retains one or more instructions transmitted from the instruction cache memory 25 corresponding to the instruction fetch request. The constant value for increasing the address value in the sequential direction is a value according to the amount of instructions which are transferred from the instruction cache memory 25 in response to one instruction fetch request and retained in an entry of the instruction buffer 24. For example, when the amount of instructions transferred from the instruction cache memory 25 and retained in the entry of the instruction buffer 24 is 32 bytes, the address value may be increased by 32, which is an amount of eight instructions, in the sequential direction.

The instruction address control unit 23 and the instruction buffer 24 have plural entries. Each entry IBR0, IBR1, ..., IBR7 includes an instruction address IAD transmitted as the instruction fetch address, an instruction IDT corresponding thereto, a valid bit IADF indicating whether the instruction address IAD is valid or not, and a valid bit IDTF indicating whether the instruction IDT is valid or not. When supply of the retained instruction IDT to the instruction decoder 26 is completed, each entry is cleared by controlling the valid bits IADF, IDTF to indicate that the entry is invalid, and is used for a new instruction fetch request. Although FIG. 2 illustrates an example having eight entries IBR0, IBR1, ..., IBR7, the number of entries is arbitrary. Further, although two valid bits IADF, IDTF are provided in each entry in the example illustrated in FIG. 2, at least one valid bit may be provided in each entry.

In the example explained in this embodiment, there is processing of IA cycle, IT cycle, IM cycle, IB cycle, IR cycle, and D cycle in a period from start of instruction fetch to supply of the instruction to the instruction decoder, and thus it takes at least five cycles. Note that the following description is an example of the case where the branch prediction result is obtained when two cycles pass after the IA cycle, and the instruction corresponding to the instruction fetch request exists in the instruction cache memory 25.

In the IA cycle, the instruction fetch request is issued from the instruction fetch control unit 21 to the instruction cache memory 25, and the instruction fetch address is transmitted simultaneously from the instruction address control unit 23 to the instruction cache memory 25. Further, a corresponding entry is assigned to this instruction fetch request.

In the IT cycle, a tag is retrieved corresponding to the instruction fetch address in the instruction cache memory 25. Further, the instruction address control unit 23 transmits the instruction fetch address generated in the IA cycle to the branch prediction mechanism 22, and the branch prediction mechanism 22 performs the branch prediction by using this instruction fetch address.

In the IM cycle, matching between the tag retrieved in the IT cycle in the instruction cache memory 25 and the instruction fetch address is judged. Further, the branch prediction mechanism 22 transmits the branch prediction result to the instruction fetch control unit 21 and further transmits, when the branch taken is predicted, the branch destination prediction address to the instruction address control unit 23.

In the IB cycle, the instruction for the instruction fetch request issued in the IA cycle is transmitted from the instruction cache memory 25 to the instruction buffer 24. Further, when the branch prediction result for the instruction fetch request issued in the IA cycle is the branch taken, the instruction fetch request for a branch destination prediction address is issued from the instruction fetch control unit 21 to the instruction cache memory 25. Simultaneously, this branch destination prediction address is transmitted as the instruction fetch address from the instruction address control unit 23 to the instruction cache memory 25.

In the IR cycle, a signal indicating validity of the instruction transmitted to the instruction buffer 24 in the IB cycle is transmitted from the instruction cache memory 25 to the instruction fetch control unit 21. Further, an instruction is transmitted from the instruction buffer 24 to the instruction decoder 26. When all the instructions in the entry of the instruction buffer 24 are transmitted to the instruction decoder 26, this entry is released.

In the D cycle, decoding of the instructions is performed in the instruction decoder 26.

Here, in this embodiment, in each branch history stored in the branch prediction mechanism, a moving distance flag is provided, which indicates how far the branch instruction address which is the instruction address of a branch instruction itself is separated from the branch destination address which is an instruction address of a branch destination instruction. In the case where the address value is increased by a constant value in the sequential direction in every cycle so as to issue the instruction fetch requests sequentially, the moving distance flag is information equivalent to the number of cycles from when the instruction fetch request of the branch instruction address is issued to when the instruction fetch request of the branch destination address is issued. For example, when the amount of instructions retained in the entry of the instruction buffer is M bytes, the value of P is used as the moving distance flag when the branch destination address is equal to or more than the branch instruction address + M X P and less than the branch instruction address + M X (P + 1), or 0 is used as the moving distance flag in other cases. In other words, the moving distance flag is information indicating that the difference between the branch instruction address and the branch destination address is within a certain range. Note that P is any integer of 1 to N, and N is the number of cycles from when the instruction fetch request of the branch instruction address is issued to when the instruction fetch request of the branch destination address based on the branch prediction result is issued.

Then, in this embodiment, when the branch taken is predicted in the branch prediction, the moving distance flag is supplied to the instruction fetch control unit together with the branch prediction result, and the instruction buffer is controlled as follows by using the moving distance flag.

### (1) When the moving distance flag is 0

The instruction fetch requests of N times in the sequential direction are canceled, and the instruction fetch request is newly issued for the branch destination prediction address.

### (2) When the moving distance flag is 1

Already-issued instruction fetch requests are not cancelled and are used as they are.

### (3) When the moving distance flag is P (> 1)

The instruction fetch requests of (P - 1) times in the sequential direction after the instruction fetch request of the branch instruction address is issued are canceled, and instruction fetch requests of P-th time and thereafter are used as they are.

By having the moving distance flag in each branch history in this manner, whether the instruction fetch request for the branch destination prediction address is included or not in the instruction fetch requests of N times in the sequential direction performed before the branch prediction result is recognized can be judged simultaneously as the branch prediction result is recognized. Then, when it is judged that the instruction fetch request for the branch destination prediction address is included, this instruction fetch request is used as it is without being canceled, so as to increase speed of instruction fetch and improve performance. Further, by coding a difference in address value between the branch instruction address and the branch destination address by a cycle number and including it as the moving distance flag in the branch history, only an increment in data amount is small, and increase in data amount accompanying addition of the moving distance flag can be suppressed.

Next, operation of the instruction control device in this embodiment will be described.

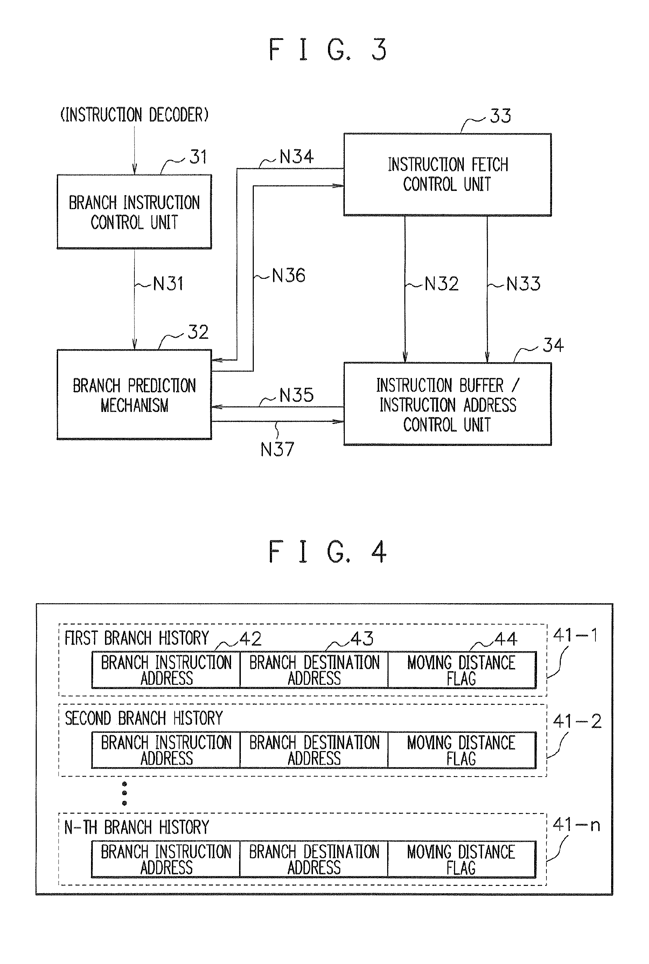

FIG. 3 is a diagram for describing the branch prediction operation in the instruction control device in this embodiment. To perform the branch prediction, information of branch instructions which are executed in the past is used. When it is determined that an instruction is a branch instruction as a result of instruction decoding, the branch instruction is transmitted from the instruction decoder to a branch instruction control unit 31. The branch instruction control unit 31 checks whether a branch of the branch instruction is taken or not based on the branch instruction and, in the case of the branch taken, transmits branch instruction information N31 related to this branch instruction to a branch prediction mechanism 32 after waiting for determination of the branch destination address. The branch instruction information N31 transmitted to the branch prediction mechanism 32 includes the branch taken or not taken, the branch instruction address, and the branch destination address.

The branch prediction mechanism 32 calculates the moving distance flag from the difference between the branch instruction address and the branch destination address based on the branch instruction address and the branch destination address of the branch instruction information N31 transmitted from the branch instruction control unit 31. Then, as illustrated in FIG. 4, the branch prediction mechanism 22 stores the calculated moving distance flag 44 as branch histories 41-1, 41-2, ..., 41-n in addition to the branch instruction address 42 and the branch destination address 43 of the transmitted branch instruction information N31.

An instruction fetch control unit 33 issues an instruction fetch request to the instruction cache memory in the IA cycle, and outputs an instruction address control signal N32 and an instruction buffer control signal N33 to an instruction buffer and instruction address control unit 34. Upon reception of the instruction address control signal N32 and the instruction buffer control signal N33 outputted in response to the instruction fetch request, the instruction buffer and instruction address control unit 34 outputs the instruction fetch address to the instruction cache memory, and assigns an entry of the instruction buffer for storing an instruction transferred from the instruction cache memory.

In the IT cycle thereafter, the instruction fetch control unit 33 instructs the instruction buffer and instruction address control unit 34 to give a notification N35 of the instruction fetch address outputted together with the instruction fetch request to the branch prediction mechanism 32. Further, the instruction fetch control unit 33 outputs a branch prediction signal N34 for this instruction fetch address to the branch prediction mechanism 32.

Upon reception of the branch prediction signal N34, the branch prediction mechanism 32 retrieves the branch history by using the instruction fetch address notified by the instruction buffer and instruction address control unit 34, and notifies a branch prediction result (branch taken or not taken) N36 thereof to the instruction fetch control unit 33. When the branch taken is predicted, the branch prediction mechanism 32 notifies the contents of the moving distance flag in the branch history together as the branch prediction result N36 to the instruction fetch control unit 33. Further, when the branch taken is predicted, the branch prediction mechanism 32 notifies the branch destination address in the branch history as a branch destination prediction address N37 to the instruction buffer and instruction address control unit 34.

When the branch prediction result is recognized when N cycles pass after the instruction fetch request is issued, the instruction fetch control unit 33 issues the instruction fetch requests of N times in the sequential direction and secures the entry for the N instruction buffers corresponding to the respective requests in advance until the branch prediction result is obtained. When the branch prediction result for the instruction fetch request of the branch prediction origin is obtained from the branch prediction mechanism 32, the instruction fetch control unit 33 performs control as follows according to this branch prediction result.

### (A) When the branch prediction result is a branch not taken

The already-issued instruction fetch requests of N times in the sequential direction are not canceled and are used as they are.

### (B) When the branch prediction result is the branch taken and the moving distance flag is 0

The already-issued instruction fetch requests of N times in the sequential direction are cancelled, and release of the entries of the instruction buffer secured for the requests is instructed. Further, the instruction fetch request for the branch destination prediction address is newly issued, and the entry of the instruction buffer corresponding to this request is secured.

### (C) When the branch prediction result is the branch taken and the moving distance flag is 1

The already-issued instruction fetch requests of N times in the sequential direction are not canceled. The instruction fetch request issued in the cycle just after the instruction fetch request of the branch prediction origin is issued is used as it is as a substitute for the instruction fetch request for the branch destination prediction address.

### (D) When the branch prediction result is the branch taken and the moving distance flag is P (1 < P ≦ N)

Among the already-issued instruction fetch requests of N times in the sequential direction, the instruction fetch requests of (P - 1) times in the sequential direction after the instruction fetch request for the branch origin is issued are cancelled, and release of the entries of the instruction buffer secured for this request is instructed. Further, the instruction fetch requests of P-th time and thereafter are used as they are with the instruction fetch request of P-th time being used as a substitute for the instruction fetch request for the branch destination prediction address.

In the control of (A) to (D) described above, cancel of the instruction fetch requests and release of the entries of the instruction buffer are performed by controlling the valid bits of the corresponding instruction address control unit 23 and the entry of the instruction buffer 24.

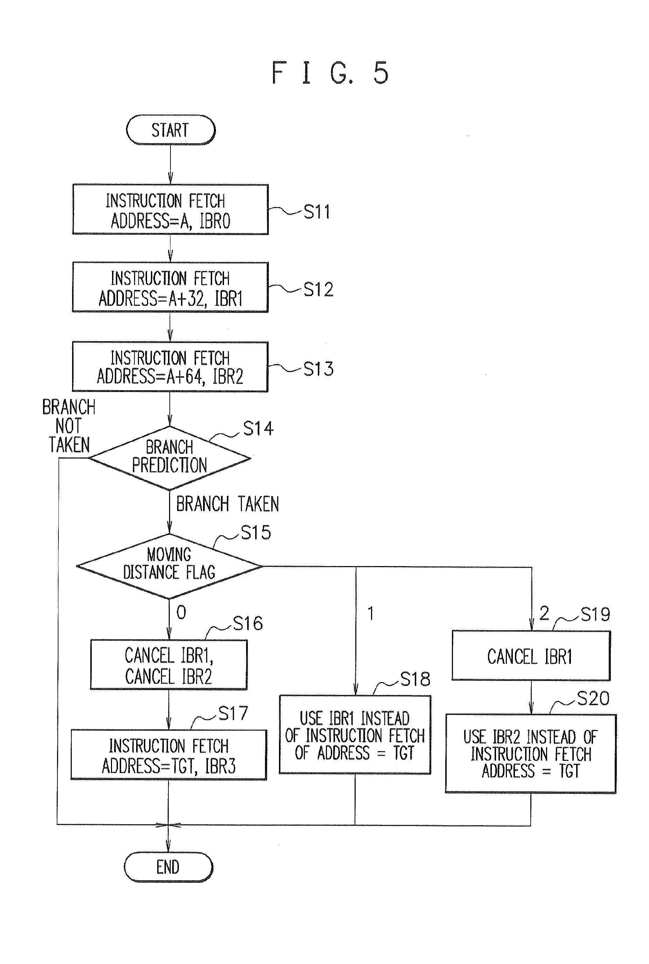

FIG. 5 is a flowchart illustrating an example of the instruction fetch operation by the instruction control device in this embodiment. FIG. 5 illustrates an operation according to the branch prediction result for the instruction fetch request with the instruction fetch address being A as an example. Further, it is assumed that in the instruction fetch request in the sequential direction, the address value is increased by 32 bytes which are equivalent to eight instructions, and the branch prediction result is recognized when two cycles pass after the instruction fetch request is issued. Therefore, in the example illustrated in FIG. 5, when the branch destination address is equivalent to the branch instruction address + 32 bytes or more and less than the branch instruction address + 64 bytes, 1 is stored as the moving flag in the branch history. Further, when the branch destination address is equivalent to the branch instruction address + 64 bytes or more and less than the branch instruction address + 96 bytes, 2 is stored as the moving flag in the branch history. In other cases, 0 is stored as the moving distance flag in the branch history.

First, the instruction fetch control unit 21 issues the instruction fetch request to the instruction cache memory 25, and the instruction address control unit 23 transmits the instruction fetch address A to the instruction cache memory 25 and requests for the instruction fetch (S11). Further, the entry corresponding to this instruction fetch request is assigned. Here, it is assumed that the entry IBR0 is assigned to the instruction fetch address A. The valid bits IADF, IDTF of the entry IBR0 are set to indicate validity, and the instruction IDT from the instruction cache memory 25 is stored in the entry IBR0.

Here, it takes 2 cycles until the instruction fetch control unit 21 receives the result of branch prediction using the instruction fetch address A from the branch prediction mechanism 22, and thus instruction fetch requests of two times in the sequential direction are issued in this period. That is, similarly to step S11, the instruction fetch request for the instruction fetch address (A + 32) is issued (S12), and thereafter the instruction fetch request for the instruction fetch address (A + 64) is issued (S13). Further, when the entries IBR1, IBR2 are assigned to the respective instruction fetch requests, their valid bits IADF, IDTF are controlled to indicate validity, and the instruction IDT supplied as a response to the instruction fetch requests is stored.

Upon reception of the result of branch prediction using the instruction fetch address A from the branch prediction mechanism 22, the instruction fetch control unit 21 proceeds to step S15 when the branch prediction result is the branch taken, or finishes the operation according to this branch prediction result when it is not the branch taken (S14). When the branch prediction result is the branch taken, the instruction fetch control unit 21 performs control as follows by using the moving distance flag supplied from the branch prediction mechanism 22 together with the branch prediction result (S15).

When the moving distance flag is 0, the instruction fetch control unit 21 cancels the instruction fetch requests of two times in the sequential direction, and releases the entries IBR1, IBR2 of the instruction buffer which are assigned to these instruction fetch requests (S16). That is, the instruction fetch control unit 21 sets the valid bits IADF, IDTF of the entries IBR1, IBR2 to indicate invalidity. Further, the instruction fetch request for the branch destination prediction address with the instruction fetch address being a branch destination prediction address TGT is issued, and the entry IBR3 is assigned as the entry corresponding to this instruction fetch request (S17). The instruction IDT supplied as a response to the instruction fetch request for the branch destination prediction address is stored in the entry IBR3 of the instruction buffer, and is supplied thereafter to the instruction decoder 26.

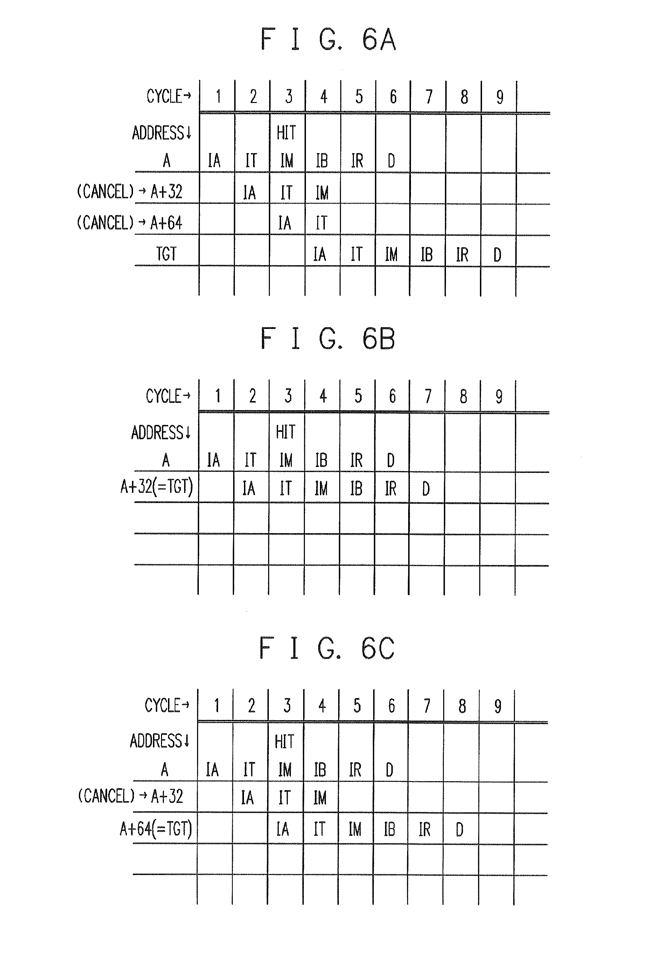

Thus, when the moving distance flag is 0, as illustrated in FIG. 6A, after the instruction fetch request for the instruction fetch address A is issued in cycle 1, when the branch prediction result for the instruction fetch address A is recognized in cycle 3, the instruction fetch requests of two times in the sequential direction which are issued in this period are canceled. Then, the instruction fetch request for the branch destination prediction address TGT is issued in cycle 4, and processing thereafter is executed.

Further, when the moving distance flag is 1, the instruction fetch control unit 21 does not cancel the instruction fetch requests of two times in the sequential direction. That is, the valid bits IADF, IDTF of the entries IBR1, IBR2 are maintained in a state of indicating validity. The instruction fetch control unit 21 uses the instruction fetch request for the already-issued instruction fetch address (A + 32) instead of the instruction fetch request for the branch destination prediction address TGT (S18). Further, the instruction fetch control unit 21 uses the instruction fetch request for the already-issued instruction fetch address (A + 64) instead of the instruction fetch request for the address (TGT + 32) subsequent to the branch destination prediction address TGT.

As illustrated in FIG. 6B, after the instruction fetch request for the instruction fetch address A is issued in cycle 1, the branch prediction result for the instruction fetch address A is recognized in cycle 3. When this branch prediction result is the branch taken and the moving distance flag is 1, the instruction fetch requests in the sequential direction issued in this period are used as they are without being canceled, and processing thereafter is executed. Accordingly, as compared to the case illustrated in FIG. 6A, a performance improvement effect of two cycles can be obtained.

Further, when the moving distance flag is 2, the instruction fetch control unit 21 cancels the already-issued instruction fetch address (A + 32), and releases the entry IBR1 of the instruction buffer which is assigned to the instruction fetch request thereof (S19). On the other hand, the instruction fetch control unit 21 does not cancel the instruction fetch request for the already-issued instruction fetch address (A + 64), and uses it instead of the instruction fetch request for the branch destination prediction address TGT (S20). That is, the valid bits IADF, IDTF of the entry IBR1 are set to indicate invalidity, and the valid bits IADF, IDTF of the entry IBR2 are maintained in a state of indicating validity.

As illustrated in FIG. 6C, after the instruction fetch request for the instruction fetch address A is issued in cycle 1 (IA cycle), the branch prediction result for the instruction fetch address A is recognized in cycle 3 (IM cycle). When this branch prediction result is the branch taken and the moving distance flag is 2, the already-issued instruction fetch request of first time in the sequential direction is canceled, the instruction fetch request of second time in the sequential direction is used as it is without being canceled, and processing thereafter is executed. Thus, as compared to the case illustrated in FIG. 6A, a performance improvement effect of one cycle is obtained.

A control related to canceling regarding an instruction fetch request (instruction fetch cancel control) and a control related to release of the entry of the instruction buffer (instruction buffer cancel) will be described. These controls are realized by the instruction fetch control unit 21.

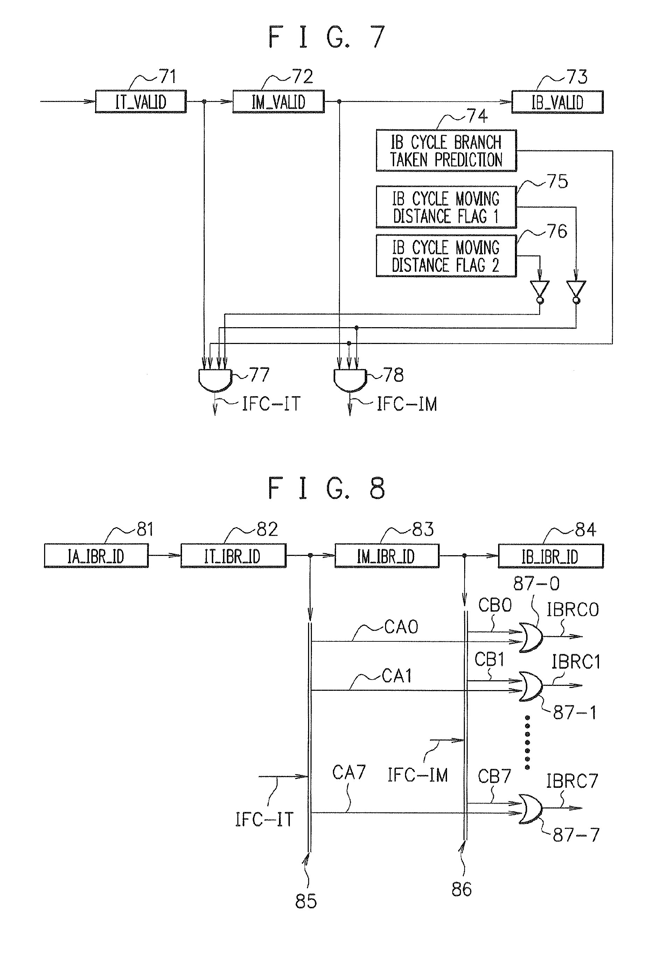

FIG. 7 is a diagram illustrating an example of the instruction fetch cancel control. When the instruction fetch request is issued in the IA cycle, IT_VALID (71), IM_VALID (72), and IB_VALID (73) are set sequentially as information indicating which processing cycle the processing on this issued request is in.

Further, when the branch prediction result for this request is notified from the branch prediction mechanism 22 in the IM cycle, the instruction fetch control unit 21 sets respective flags 74 to 76 based on the branch prediction result. The instruction fetch control unit 21 sets an IB cycle branch taken prediction (74) when the branch prediction result predicting the branch taken is received. Moreover, the instruction fetch control unit 21 decodes the value of the moving distance flag received together with the branch prediction result, sets an IB cycle moving distance flag 1 (75) when the value of the moving distance flag is 1, and sets an IB cycle moving distance flag 2 (76) when the value of the moving distance flag is 2.

The instruction fetch control unit 21 controls whether or not to cancel two instruction fetch requests issued after the branch instruction by using these three flags 74 to 76 in the IB cycle after one cycle passes. Here, as illustrated in FIG. 6A, when the processing cycle of the branch instruction is the IB cycle, the processing cycle of the instruction fetch requests in the sequential direction issued until the branch prediction result is recognized is the IM cycle and the IT cycle.

When the IT_VALID (71) is 1 and the IB cycle branch taken prediction (74) is 1, and the IB cycle moving distance flag 1 (75) and the IB cycle moving distance flag 2 (76) are both 0, all inputs of an AND gate (logical product operation circuit) 77 become 1. Therefore, an IT cycle instruction fetch cancel signal IFC-IT outputted by the AND gate 77 becomes 1. The IT cycle instruction fetch cancel signal IFC-IT is a signal which instructs canceling of the instruction fetch request which is in the IT cycle at the present moment when the value thereof is 1.

Further, when the IM_VALID (72) is 1 and the IB cycle branch taken prediction (74) is 1 and the IB cycle moving distance flag 1 (75) is 0, all inputs of an AND gate 78 become 1. Therefore, an IM cycle instruction fetch cancel signal IFC-IM outputted by the AND gate 78 becomes 1. The IM cycle instruction fetch cancel signal IFC-IM is a signal which instructs canceling of the instruction fetch request in the IM cycle at the present moment when the value thereof is 1.

Specifically, when the IB cycle moving distance flag 1 (75) is 1, the IT cycle instruction fetch cancel signal IFC-IT and the IM cycle instruction fetch cancel signal IFC-IM are both suppressed (value is 0). Further, when the IB cycle moving distance flag 2 (76) is 1, the IM cycle instruction fetch cancel signal IFC-IM is suppressed (value is 0).

FIG. 8 is a diagram illustrating an example of the instruction buffer cancel control. When the instruction fetch request is issued in the IA cycle, the entry of the instruction buffer corresponding to this issued instruction fetch request is assigned. The entry number (IBR_ID) of this instruction buffer is set in the order of IA_IBR_ID (81), IT_IBR_ID (82), IM_IBR_ID (83), and IB_IBR_ID (84) corresponding to the processing cycle of the instruction fetch request.

When the value of the IT cycle instruction fetch cancel signal IFC-IT supplied is 1, cancel signals CA0 to CA7 for the entry pointed by the IT_IBR_ID (82) which is an entry number of the instruction buffer of the IT cycle are issued by a processing unit 85. When the value of the IM cycle instruction fetch cancel signal IFC-IM is 1, cancel signals CB0 to CB7 for the entry pointed by the IM_IBR_ID (83) which is an entry number of the instruction buffer of the IM cycle are issued by a processing unit 86.

A cancel signal CAi issued by the processing unit 85 and a cancel signal CBi issued by the processing unit 86 are inputted to an OR gate (logical sum operation circuit) 87-i, and an operation result thereof is outputted as a cancel signal IBRCi of an entry. Note that i is an index and i = an integer of 0 to 7. When the value of the cancel signal IBRCi of an entry is 1, the valid bits IADF, IDTF of this entry are set to indicate invalidity, and the entry is cleared.

According to this embodiment, at the same timing as the branch prediction result is recognized, information related to the difference between the branch instruction address and the branch destination address is obtained by the moving distance flag. Accordingly, whether the instruction fetch request corresponding to the branch destination prediction address is included or not in the instruction fetch requests of N times in the sequential direction which are performed until the branch prediction result is recognized can be judged at the same time as the branch prediction result is recognized. Thus, when the instruction fetch request corresponding to the branch destination prediction address is included, the instruction retained in the entry of the instruction buffer by this request is used as it is without being canceled. Therefore, the possibility that the entry of the instruction buffer can be used as it is increases, and thereby the instructions retained in the instruction buffer can be used efficiently and the performance of the instruction fetch can be improved. Further, since the moving distance flag registered in the branch prediction mechanism is used, it is possible to effectively use the instruction buffer even in the case of the branch instruction of register relative address specification.

According to one aspect of the embodiment, when the instruction fetch request corresponding to the address of a predicted branch destination is included in the already issued instruction fetch requests, the instruction retained in the instruction buffer can be used as it is. Thus, the instructions retained in the instruction buffer can be used efficiently, and performance of the instruction fetch can be improved.

## Claims

1. A processing device, comprising:
a storage unit (15) that stores instructions;
an instruction buffer (24) that retains one or more instructions obtained from the storage unit based on an instruction fetch request for obtaining an instruction stored in the storage unit;
an instruction decoding unit (26) that decodes an instruction outputted by the instruction buffer;
an execution unit (12) that executes an instruction decoded by the instruction decoding unit;
a branch prediction unit (22) that retains branch history information (41) including distance information (44) indicating a difference between a branch instruction address which is an address of a branch instruction and a branch destination instruction address which is an address of an instruction of a branch destination among instructions executed by the execution unit and performs a branch prediction of an instruction obtained based on the instruction fetch request by using the retained branch history information; and
a control unit (21) that issues the instruction fetch request and, in a period from when an instruction fetch request for a first address is issued to when the branch prediction unit outputs a branch prediction result for a first instruction obtained based on the issued instruction fetch request, issues an instruction fetch request for a second address made by adding a certain value to the first address,
wherein when the branch prediction unit predicts that the branch prediction result of the first instruction is a branch taken, if it is judged based on the distance information that the branch destination instruction address predicted as the branch taken is included in an address corresponding to the instruction fetch request for the second address, the control unit causes the instruction decoding unit to output an instruction retained in the instruction buffer based on the instruction fetch request for the second address without issuing an instruction fetch request for the branch destination instruction address.

2. The processing device according to claim 1, wherein when the branch prediction unit predicts that the branch prediction result of the first instruction is a branch taken, the control unit invalidates an instruction retained by an instruction fetch request related to the second address among the instructions retained in the instruction buffer based on the distance information.

3. The processing device according to claim 1 or 2, wherein the branch history information retained by the branch prediction unit further includes branch instruction addresses and branch destination instruction addresses.

4. A method for controlling a processing device having a storage unit that stores instructions, the method comprising:
by a control unit included in the processing device, issuing an instruction fetch request for obtaining an instruction for a first address;
by an instruction buffer included in the processing device, retaining one or more instructions obtained from the storage unit based on an instruction fetch request for obtaining an instruction stored in the storage unit;
by a branch prediction unit included in the processing device, retaining branch history information including distance information indicating a difference between a branch instruction address which is an address of a branch instruction and a branch destination instruction address which is an address of an instruction of a branch destination among instructions executed by an execution unit included in the processing device, and performing a branch prediction of an instruction obtained based on the instruction fetch request by using the retained branch history information;
by the control unit, in a period until the branch prediction unit outputs a branch prediction result for a first instruction obtained based on the issued instruction fetch request, issuing an instruction fetch request for a second address made by adding a certain value to the first address;
when the branch prediction unit predicts that the branch prediction result of the first instruction is a branch taken, if it is judged based on the distance information that the branch destination instruction address predicted as the branch taken is included in an address corresponding to the instruction fetch request for the second address, causing by the control unit an output of an instruction retained in the instruction buffer based on the instruction fetch request for the second address without issuing an instruction fetch request for the branch destination instruction address;
by an instruction decoding unit included in the processing device, decoding an instruction outputted by the instruction buffer; and
by the execution unit, executing an instruction decoded by the instruction decoding unit.

5. The method for controlling the processing device according to claim 4, further comprising:
when the branch prediction unit predicts that the branch prediction result of the first instruction is a branch taken, invalidating an instruction retained by an instruction fetch request related to the second address among the instructions retained in the instruction buffer based on the distance information.

6. The method for controlling the processing device according to claim 4 or 5, wherein the branch history information retained by the branch prediction unit further includes branch instruction addresses and branch destination instruction addresses.
